# EUROPÄISCHE PATENTSCHRIFT

(11) **EP 1 293 742 B1**
(45) Veröffentlichungstag und Bekanntmachung des Hinweises auf die Patenterteilung: **26.04.2006**
(21) Anmeldenummer: 02017055.1
(22) Anmeldetag: 27.07.2002
(51) Int. Cl.: F28D 7/16

(54) **Abgaswärmeübertrager**
Exhaust gas heat exchanger
Echangeur de chaleur pour gaz d'échappement

(30) Priorität: 12.09.2001 DE 10144827
(43) Veröffentlichungstag der Anmeldung: 19.03.2003
(73) Patentinhaber: Behr GmbH & Co. KG, 70469 Stuttgart (DE)
(72) Erfinder: Schindler, Martin, 70176 Stuttgart (DE); Schmidt, Michael, 76133 Karlsruhe (DE)
(74) Vertreter: Grauel, Andreas

(56) Entgegenhaltungen:
- DE-A- 3 039 742
- DE-A- 3 828 034
- DE-A- 19 962 863
- US-A- 4 179 222
- US-A- 4 352 378

## Beschreibung

Die Erfindung betrifft einen Abgaswärmeübertrager gemäß dem Oberbegriff des Anspruches 1.

Aus der DE 199 62 863 A1 ist ein Abgaswärmeübertrager zur Übertragung von Wärme zwischen dem Abgas einer Brennkraftmaschine eines Kraftfahrzeuges und einem Kühlmittel bekannt, der ein Gehäuse mit einer Abgaseintrittsöffnung und einer Abgasaustrittsöffnung sowie einem Abgaseintrittsbereich und einem Abgasaustrittsbereich und dazwischen einem Wärmeübertragungsbereich umschließt. Hierbei ist in das Gehäuse ein dem Wärmeübertragungsbereich zugeordneter, von einem Teilstrom des Abgases durchströmter Bypasskanal integriert, der gegenüber dem Kühlmittel thermisch isoliert ist. Der Bypasskanal ist hierfür gegenüber dem Wärmeübertragungsbereich durch eine Trennwand fluiddicht abgedichtet. Die beiden Teilströme des Abgases werden im Endbereich des Abgaswärmeübertragers zusammengeführt.

Ein derartiger Abgaswärmeübertrager lässt jedoch noch Wünsche offen. Der Erfindung liegt die Aufgabe zugrunde, einen derartigen Abgaswärmeübertrager zu verbessern.

Diese Aufgabe wird erfindungsgemäß durch einen Abgaswärmeübertrager mit den Merkmalen des Anspruches 1 gelöst. Vorteilhafte Ausgestaltungen sind Gegenstand der Unteransprüche.

Dadurch, dass der erfindungsgemäße Abgaswärmeübertrager eine Mischvorrichtung aufweist, erfolgt im Falle einer Teilung des Abgasstromes im Abgaswärmeübertrager, wobei ein Teil durch den Abgaskühler und der andere Teil durch den Bypass strömt, eine schnellere Mischung des aus dem Abgaswärmeübertrager ausströmenden Abgases, so dass bspw. einem nachfolgend angeordneten NOx-Katalysator bei einem direkteinspritzenden Otto-Motor oder ggf. auch bei einer geregelten Abgasrückführung gleichmäßig temperiertes Abgas zu- bzw. rückgeführt werden kann. Ferner kann eine genauere Regelung der Abgastemperatur erfolgen.

Vorzugsweise ist hierbei die Mischvorrichtung direkt in den Abgaswärmeübertrager integriert, also direkt im Gehäuse hiervon angeordnet.

Die Mischvorrichtung verwirbelt zwei Teilströme des Abgases miteinander, wobei ein Teilstrom des Abgases zuvor durch den Abgaskühler geströmt ist, d.h. gekühlt ist und der andere Teilstrom durch den Bypass geströmt ist, d.h. im wesentlichen ungekühlt ist. Bei der Verwirbelung entstehen vorzugsweise zwei oder mehr entgegengesetzt drehende Wirbel.

Vorzugsweise weist die Mischvorrichtung mindestens zwei schräg zur Strömungsrichtung des Abgases angeordnete Bereiche auf. Die Bereiche werden vorzugsweise durch eine Platte gebildet, die um eine quer zur Strömungsrichtung des Abgases verlaufende Achse gebogen ist. Vorzugsweise greifen die Bereiche mehrfach ineinander.

Gemäß einer bevorzugten Ausführungsform weisen die Bereiche die Gestalt mindestens einer zweizinkigen Gabel auf. Vorzugsweise werden hierbei die Zinken der Gabel zuerst vom durchströmenden Abgas umströmt.

Gemäß einer alternativen Ausführungsform umfasst die Mischvorrichtung drei Platten, wobei die Platten Bereiche aufweisen, die schräg zur Strömungsrichtung ausgerichtet sind. Es können jedoch auch mehr oder, bei entsprechender Ausgestaltung, weniger Platten vorgesehen sein.

Vorzugsweise sind die Bereiche derart angeordnet, dass die Strömung des Abgases zwei oder mehr entgegengesetzt drehende Wirbel bildet, die jeweils einen Teilstrom des gekühlten und des durch den Bypass geströmten, ungekühlten Abgases umfassen.

Vorzugsweise sind die Platten ineinander gesteckt, wofür entsprechende Schlitze in den Platten vorgesehen sind.

Im folgenden ist die Erfindung anhand zweier in der Zeichnung dargestellten Ausführungsbeispiele näher erläutert. Es zeigen:
- Fig. 1: einen schematisch dargestellten Abschnitt der Abgasleitung vom Motor ausgehend mit einem Abgaswärmeübertrager samt Mischvorrichtung gemäß dem ersten Ausführungsbeispiel,
- Fig. 2: eine teilweise geschnitten dargestellte Ansicht der Mischvorrichtung von Fig. 1,
- Fig. 3: eine Seitenansicht der Mischvorrichtung von Fig. 1,
- Fig. 4: eine weitere Seitenansicht der Mischvorrichtung von Fig. 1,
- Fig. 5: eine Ansicht entgegen der Strömungsrichtung der Mischvorrichtung von Fig. 1
- Fig. 6: eine Ansicht entgegen der Strömungsrichtung der Mischvorrichtung gemäß dem zweiten Ausführungsbeispiel,
- Fig. 7: eine Seitenansicht der Mischvorrichtung in Richtung des Pfeils VII von Fig. 6 und
- Fig. 8: eine isometrische Ansicht der Mischvorrichtung von Fig. 6.

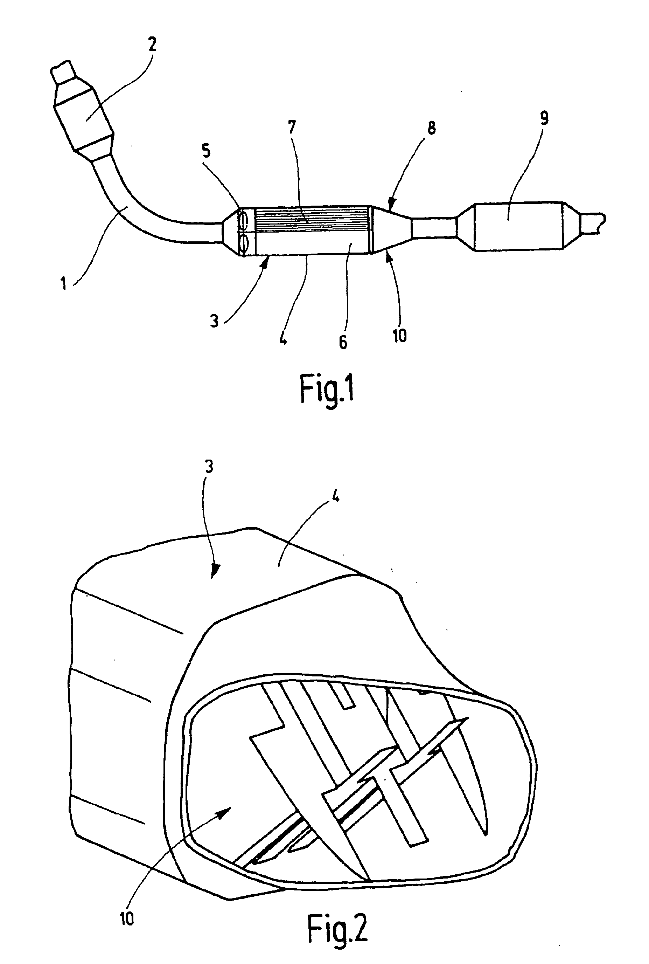

Die in Fig. 1 dargestellte Abgasleitung 1 weist vom Motor (nicht dargestellt) kommend einen Vorkatalysator 2, einen Abgaswärmeübertrager 3 mit einem Gehäuse 4 von im wesentlichen 8-eckigem Querschnitt, zwei Abgasklappen 5 zur Regelung des Abgasstromes durch einen Bypass 6 und/oder 14 Wingletrohre 7, in denen das Abgas abgekült werden kann, und einer an den Bypass 6 und die Wingletrohre 7 folgende Mischvorrichtung 8, sowie einen nachfolgend angeordneten NOx-Speicherkatalysator 9 auf.

Durch das Innere des Gehäuses 4 strömt das Abgas, das je nach Bedarf an den von einem Kühlmittel durchströmten Wingletrohren 7 zur Kühlung oder Erwärmung des Abgases vorbeigeführt oder im wesentlichen ohne Temperaturänderung durch den Bypass 6 geleitet wird, so dass es mit einer vorbestimmten Temperatur dem nachfolgend angeordneten NOx-Katalysator 9 zugeführt wird, welcher dann im optimalen Bereich arbeiten kann.

Damit das dem NOx-Katalysator 9 zugeführte Abgas auch bei Durchleitung des Abgases, welche teilweise durch den Bypass 6 und teilweise durch die Wingletrohre 7 erfolgt, möglichst über den gesamten Strömungsquerschnitt hinweg die gleiche Temperatur hat, ist direkt in dem Bereich 10, in dem die beiden Teilströme zusammengeführt werden, die Mischvorrichtung 8 vorgesehen. Diese Mischvorrichtung 8 dient der Vermischung der beiden Teilströme des Abgases, so dass sich eine homogene Temperaturverteilung bei möglichst geringem Druckverlust ergibt.

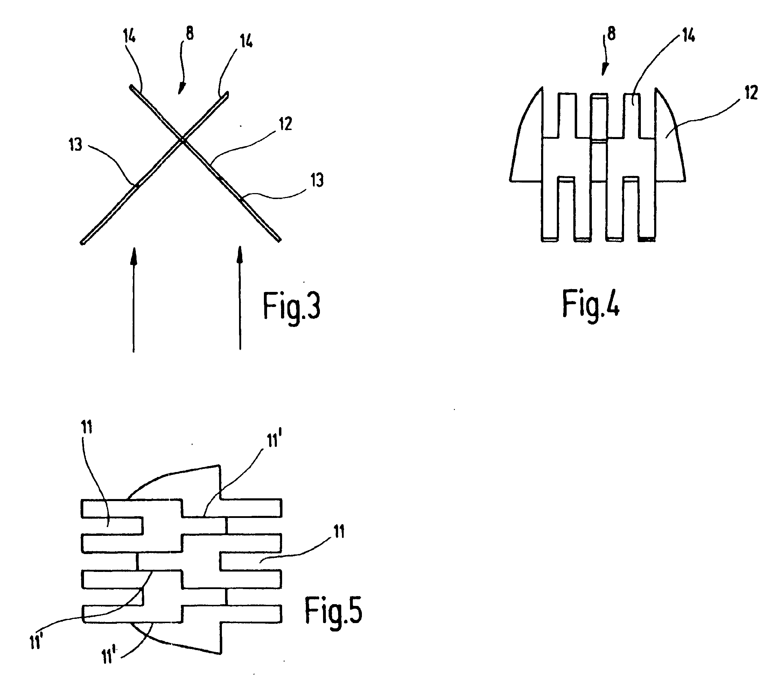

Hierzu weist die Mischvorrichtung 8 gemäß dem ersten Ausführungsbeispiel eine mit Schlitzen 11 und schmalen Einschnitten 11' versehene Platte 12 auf, die mittig nahezu in einem rechten Winkel gebogen ist, so dass im wesentlichen zwei Teilbereiche 13 entstehen. Dabei sind einzelne Schenkel 14 der Teilbereiche 13 nicht umgebogen und kreuzen Schenkel 14 des anderen Teilbereichs 13. Die beiden Teilbereiche 13 haben im wesentlichen die Gestalt mehrerer nebeneinander angeordneter zweizinkiger Gabeln deren Stiel die Schenkel 14 bilden. Bauraumbedingt fehlt bei den Gabeln am Rand der äußere Zinken. Die Platte 12 ist ihrerseits derart im Abgaswärmeübertrager 3 angeordnet, dass jeder Teilbereich 13 der Platte 12 in einem Winkel von ca. 45° zur Strömungsrichtung ausgerichtet ist. Hierbei treffen die in Fig. 3 schematisch durch zwei Pfeile angedeuteten Teilströme mit heißem und kaltem Abgas auf die Platte 12, wobei sie zuerst auf die Zinken der Gabeln und später auf die Stiele der Gabeln treffen, und werden umgelenkt. Hierdurch kommt es zu Verwirbelungen und somit zu einer Vermischung der beiden Teilströme.

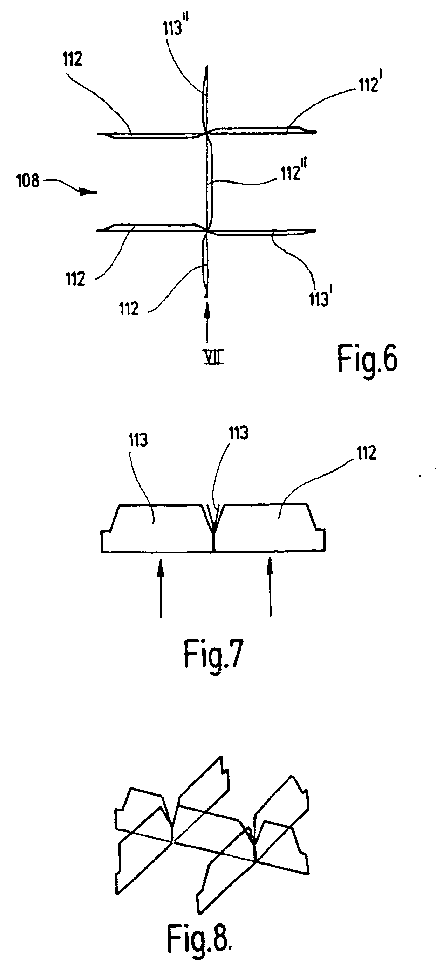

Gemäß dem in den Fig. 6 bis 8 dargestellten zweiten Ausführungsbeispiel wird die Mischvorrichtung 108 durch drei Platten 112 gebildet. Hierbei sind zwei Platten 112' senkrecht zu einer etwas längeren Platte 112" angeordnet, so dass die Platten 112' die Platte 112" jeweils mittig kreuzen. Hierbei sind die Platten 112' und 112" ineinander gesteckt und miteinander verbunden. Die Platten 112 weisen Teilbereiche 113 auf, die leicht um eine quer zur Strömungsrichtung angeordnete Achse gebogen sind. Die einzeinen Teilbereiche 113 sind jeweils bezüglich der Kreuzungspunkte der einzelnen Platten 112 in unterschiedliche Richtungen gebogen, so dass alle Teilbereiche 113' um den ersten Kreuzungspunkt im Uhrzeigersinn und alle Teilbereiche 113" um den zweiten Kreuzungspunkt entgegen dem Uhrzeigersinn gebogen sind.

Die unterschiedlich temperierten Teilströme des Abgases gelangen zuerst zu den in Strömungsrichtung angeordneten Bereichen der Platten 112, wobei sie auf unterschiedlichen Seiten der längeren Platte 112" ankommen. Durch die in einem Winkel zur Strömungsrichtung angeordneten Teilbereiche 113 werden die beiden Teilströme jeweils mittig geteilt und verwirbelt, so dass es zu einer Vermischung der beiden Teilströme kommt.

### Bezugszeichenliste

- 1: Abgasleitung
- 2: Vorkatalysator
- 3: Abgaswärmeübertrager
- 4: Gehäuse
- 5: Abgasklappe
- 6: Bypass
- 7: Wingletrohr
- 8: Mischvorrichtung
- 9: NOx-Speicherkatalysator
- 10: Bereich
- 11: Schlitz
- 11': Einschnitt
- 12: Platte
- 13: Teilbereich
- 14: Schenkel
- 108: Mischvorrichtung
- 112, 112', 112": Platte
- 113, 113', 113": Teilbereich

## Patentansprüche

1. Abgaswärmeübertrager (3) zur Übertragung von Wärme zwischen dem Abgas einer Brennkraftmaschine eines Kraftfahrzeugs und einem Kühlmittel, mit einem Gehäuse (4), das eine Abgaseintrittsöffnung und eine Abgasaustrittsöffnung und einen Wärmeübertragungsbereich umschließt, und mit einem von zumindest einem Teilstrom des Abgases durchströmbaren Bypass (6), der gegenüber dem Kühlmittel thermisch isoliert ist, **dadurch gekennzeichnet, dass** der Abgaswärmeübertrager (1) eine Mischvorrichtung (8; 108) zur Verwirbelung zweier Teilströme des Abgases miteinander aufweist.

2. Abgaswärmeübertrager nach Anspruch 1, **dadurch gekennzeichnet, dass** die Mischvorrichtung (8; 108) in das Gehäuse (4) des Abgaswärmeübertragers (1) integriert ist.

3. Abgaswärmeübertrager nach einem der vorstehenden Ansprüche, **dadurch gekennzeichnet, dass** der Bypass (6) in das Gehäuse (4) des Abgaswärmeübertragers (1) integriert ist.

4. Abgaswärmeübertrager nach einem der vorstehenden Ansprüche, **dadurch gekennzeichnet, dass** die Mischvorrichtung (8; 108) mindestens zwei schräg zur Strömungsrichtung des Abgases angeordnete Bereiche (13; 113) aufweist.

5. Abgaswärmeübertrager nach einem der vorstehenden Ansprüche, **dadurch gekennzeichnet, dass** die Mischvorrichtung (8) mindestens zwei schräg zur Strömungsrichtung angeordnete Bereiche (13) aufweist, die mehrfach ineinander greifen.

6. Abgaswärmeübertrager nach Anspruch 5, **dadurch gekennzeichnet, dass** die Bereiche (13) die Gestalt mindestens einer zweizinkigen Gabel aufweisen.

7. Abgaswärmeübertrager nach Anspruch 6, **dadurch gekennzeichnet, dass** die Zinken der Gabel vom durchströmenden Abgas zuerst umströmbar angeordnet sind.

8. Abgaswärmeübertrager nach einem der Ansprüche 1 bis 4, **dadurch gekennzeichnet, dass** die Mischvorrichtung (108) drei Platten (112) umfasst, wobei die Platten Bereiche (113) aufweisen, die schräg zur Strömungsrichtung ausgerichtet sind.

9. Abgaswärmeübertrager nach Anspruch 8, **dadurch gekennzeichnet, dass** einem Teilstrom des gekühlten Abgases zugeordnete Bereiche (113') im Uhrzeigersinn und einem Teilstrom des durch den Bypass (6) geströmten, ungekühlten Abgases zugeordnete Bereiche (113") entgegen dem Uhrzeigersinn ausgerichtet sind.

10. Abgaswärmeübertrager nach einem der Ansprüche 8 bis 9, **dadurch gekennzeichnet, dass** die Platten (112) ineinander gesteckt sind.

## Claims

1. Exhaust gas heat exchanger (3) for transferring heat between the exhaust gas of an internal combustion engine of a motor vehicle and a coolant, comprising a housing (4) enclosing an exhaust gas inlet opening and an exhaust gas outlet opening and a heat transfer area, and comprising a bypass (6) through which at least one subflow of the exhaust gas flows and which is thermally insulated against the coolant, **characterised in that** the exhaust gas heat exchanger (1) comprises a mixing device (8; 108) for swirling two subflows of the exhaust gas with each other.

2. Exhaust gas heat exchanger according to claim 1, **characterised in that** the mixing device (8; 108) is integrated into the housing (4) of the exhaust gas heat exchanger (1).

3. Exhaust gas heat exchanger according to one of the preceding claims, **characterised in that** the bypass (6) is integrated into the housing (4) of the exhaust gas heat exchanger (1).

4. Exhaust gas heat exchanger according to one of the preceding claims, **characterised in that** the mixing device (8; 108) comprises at least two areas (13; 113) which are inclined relative to the flow direction of the exhaust gas.

5. Exhaust gas heat exchanger according to one of the preceding claims, **characterised in that** the mixing device (8) comprises at least two areas (13) which are inclined relative to the flow direction and contact each other at multiple points.

6. Exhaust gas heat exchanger according to claim 5, **characterised in that** the areas (13) are in the form of at least a two-pronged fork.

7. Exhaust gas heat exchanger according to claim 6, **characterised in that** the prongs of the fork are arranged so that the exhaust gas flowing through firstly flows through them.

8. Exhaust gas heat exchanger according to one of the claims 1 to 4, **characterised in that** the mixing device (108) comprises three plates (112) wherein the plates have areas (113) which are inclined relative to the flow direction.

9. Exhaust gas heat exchanger according to claim 8, **characterised in that** areas (113') assigned to a subflow of the cooled exhaust gas are oriented in clockwise direction and areas (113'') assigned to a subflow of the uncooled exhaust gas which has flowed through the bypass (6) are oriented in anticlockwise direction.

10. Exhaust gas heat exchanger according to one of the claims 8 to 9, **characterised in that** the plates (112) are inserted into each other.

## Revendications

1. Echangeur de chaleur pour gaz d'échappement (3) servant à la transmission de chaleur entre les gaz d'échappement d'un moteur à combustion interne d'un véhicule automobile et un liquide de refroidissement, comprenant un carter (4) qui entoure une ouverture d'entrée des gaz d'échappement et une ouverture de sortie des gaz d'échappement et une zone de transmission de chaleur, et comprenant une dérivation (6) pouvant être traversée par au moins un flux partiel des gaz d'échappement, laquelle dérivation est isolée thermiquement par rapport au liquide de refroidissement,
**caractérisé**
**en ce que** l'échangeur de chaleur pour gaz d'échappement (1) présente un mélangeur (8 ; 108) servant à créer un effet de turbulence des deux flux partiels de gaz d'échappement, l'un par rapport à l'autre.

2. Echangeur de chaleur pour gaz d'échappement selon la revendication 1, **caractérisé en ce que** le mélangeur (8 ; 108) est intégré au carter (4) de l'échangeur de chaleur pour gaz d'échappement (1).

3. Echangeur de chaleur pour gaz d'échappement selon l'une ou l'autre des revendications précédentes, **caractérisé en ce que** la dérivation (6) est intégrée au carter (4) de l'échangeur de chaleur pour gaz d'échappement (1).

4. Echangeur de chaleur pour gaz d'échappement selon l'une quelconque des revendications précédentes, **caractérisé en ce que** le mélangeur (8 ; 108) présente au moins deux zones (13 ; 113) disposées de manière inclinée par rapport à la direction d'écoulement des gaz d'échappement.

5. Echangeur de chaleur pour gaz d'échappement selon l'une quelconque des revendications précédentes, **caractérisé en ce que** le mélangeur (8) présente au moins deux zones (13) disposées de manière inclinée par rapport à la direction d'écoulement, zones qui s'interpénètrent à plusieurs reprises.

6. Echangeur de chaleur pour gaz d'échappement selon la revendication 5, **caractérisé en ce que** les zones (13) présentent la forme d'au moins une fourche à deux dents.

7. Echangeur de chaleur pour gaz d'échappement selon la revendication 6, **caractérisé en ce que** les dents de la fourche sont disposées en pouvant être entourées en premier par les gaz d'échappement en circulation.

8. Echangeur de chaleur pour gaz d'échappement selon l'une quelconque des revendications 1 à 4, **caractérisé en ce que** le mélangeur (108) comprend trois plaques (112), où les plaques présentent des zones (113) qui sont orientées de manière inclinée par rapport à la direction d'écoulement.

9. Echangeur de chaleur pour gaz d'échappement selon la revendication 8, **caractérisé en ce que** des zones (113'), associées à un flux partiel des gaz d'échappement refroidis, sont orientées dans le sens des aiguilles d'une montre, et des zones (113"), associées à un flux partiel des gaz d'échappement non refroidis circulant à travers la dérivation (6), sont orientées dans le sens inverse des aiguilles d'une montre.

10. Echangeur de chaleur pour gaz d'échappement selon l'une des revendications 8 ou 9, **caractérisé en ce que** les plaques (112) sont imbriquées les unes dans les autres.
